(19) Europäisches Patentamt
European Patent Office
Office européen des brevets

(11) **EP 1 676 486 B1**

(12) **EUROPEAN PATENT SPECIFICATION**

(45) Date of publication and mention
of the grant of the patent:
**25.06.2008 Bulletin 2008/26**

(51) Int Cl.:
*A23G 9/32* *(2006.01)*      *A23L 1/09* *(2006.01)*

(21) Application number: **05257396.1**

(22) Date of filing: **01.12.2005**

(54) **Frozen confection**

Eiskonfekt

Produit de confiserie

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2004 EP 04258089**

(43) Date of publication of application:
**05.07.2006 Bulletin 2006/27**

(73) Proprietors:
• **UNILEVER PLC**
**London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **Heritage, A. F. c/o Unilever R&D Colworth Bedford MK44 1LQ (GB)**
• **Underdown, Jeffrey c/o Unilever R&D Colworth Bedford MK44 1LQ (GB)**
• **Wix, Loyd c/o Unilever R&D Colworth Bedford MK44 1LQ (GB)**

(74) Representative: **Hugot, Alain et al**
**Unilever Patent Group**
**Colworth House**
**Sharnbrook**
**Bedford, MK44 1LQ (GB)**

(56) References cited:
**EP-A- 0 600 670**      **EP-A- 1 180 330**
**US-A- 3 928 649**

• **PATENT ABSTRACTS OF JAPAN vol. 006, no. 106 (C-108), 16 June 1982 (1982-06-16) & JP 57 036944 A (LOTTE CO LTD), 27 February 1982 (1982-02-27)**

Printed by Jouve, 75001 PARIS (FR)

**Description**

Technical Field of the Invention

The present invention relates to frozen confections such as ice creams and sorbets. More particularly the present invention relates to frozen confections that are nutritionally balanced.

Background to the Invention

Frozen confections such as ice creams, sorbets and water ices are popular and convenient foods. Such ice confections contain most of the dietary factors required for a balanced diet (e.g. fat, carbohydrate and protein). Unfortunately, however, the imbalance of these factors in conventional frozen confections is such that in order to maintain an overall balanced intake, a consumer must compensate in other areas of their diet.

Many previous attempts to formulate frozen confections having a more healthy balance of dietary factors have concentrated on reducing the total fat content and/or the saturated fat content of the confections. For example, JP 57 036944 A discloses ice creams having improved nutritional properties owing to the inclusion of liquid oils (e.g. safflower oil) with low levels of saturated fat.

Despite the fact that such products may have good palatability and can help consumer's to maintain a healthy balance of fat in their diet, such products often contain disproportionate amounts of carbohydrate to compensate for the loss of palatability upon removal of fat. In particular, such products often contain large amounts of carbohydrate in the form of free sugars.

The importance of limiting the content of free sugars in a healthy diet has recently been highlighted by a Joint WHO/FOA Expert Committee (see "Diet, nutrition and the prevention of chronic diseases" - Report of a Joint WHO/FAO Expert Consultation, *WHO Technical Report Series* 916, WHO, Geneva, 2003). As a result, manufacturers have provided frozen confections which are claimed to contain no added sugar. Invariably the sugar is replaced by large amounts of non-digestible complex saccharides and/or sugar alcohols. For example, Edy' S™ Grand Ice Cream (Oakland, CA, USA) produce a chocolate flavoured frozen confection under the banner "No Sugar Added" wherein the sugar is replaced by a mixture of maltodextrin, polydextrose, sorbitol and glycerol.

Unfortunately, replacement of free sugars with non-digestible complex saccharides and/or sugar alcohols results in products with reduced energy content and often leads to inferior taste and flavour in comparison to sugar-containing products. Furthermore, high molecular weight saccharides such as polydextrose can impart undue firmness to a confection, thus further reducing palatability.

We have recognised that there is a need for a frozen confection which has an improved nutritional balance of dietary factors without loss of palatability. Such a product would be suitable for everyday consumption and/or to act as a nutritionally neutral base for delivering nutritional actives.

We have found that such a goal can be achieved by providing a frozen confection having a specific total energy content and wherein the energy contribution of the dietary factors is controlled.

Tests and Definitions

**Frozen confection**

As used herein, the term "frozen confection" refers to a sweet-tasting fabricated foodstuff intended for consumption in the frozen state (i.e. under conditions wherein the temperature of the foodstuff is less than 0°C, and preferably under conditions wherein the foodstuff comprises significant amounts of ice). Typical examples of frozen confections include ice creams, water ices and sorbets.

**Total energy content**

The total energy content (E) of a frozen confection is defined as the sum of the metabolizable energy of the dietary factors present within 100 g of the frozen confection. It is calculated using Equation 1:

$$E = \sum_j f_j c_j \qquad , \qquad (1)$$

wherein $c_j$ is the mass of dietary factor j in 100 g of the confection and $f_j$ is the calorie conversion factor for the dietary factor j.

**Dietary factors**

As defined herein, dietary factors consist of:

- Fat - saturated, monounsaturated and polyunsaturated fatty acid. Fatty acids are usually present in the form of esters (e.g. mono- / di- / tri-glycerides);

- Carbohydrate - digestible saccharides (monosaccharides, disaccharides, and complex saccharides comprising alpha glycosidic linkages, e.g. most starch-derived complex saccharides), non-digestible saccharides (non-starch complex saccharides and resistant starches) and sugar alcohols (erythritol, arabitol, glycerol, xylitol, sorbitol, mannitol, lactitol, maltitol, isomalt and polyglycitol); and

- Protein.

**Calorie Conversion Factors**

The calorie conversion factors for the dietary factors are listed in Table 1.

TABLE 1

| Dietary Factor (j) | Calorie Conversion Factor ($f_j$) | |
|---|---|---|
| | kcal /g | [kJ /g] |
| Fat | 9.0 | [37.7] |
| Carbohydrate | | |
|    Digestible saccharides | 4.0 | [16.7] |
|    Non-digestible saccharides | | |
|       Inulin | 1.2 | [5.0] |
|       Oligofructose | 2.0 | [8.4] |
|       Polydextrose | 1.0 | [4.2] |
|       Resistant Starch | 1.6 | [6.7] |
|       Pectin | 0.0 | [0.0] |
|       Cellulose | 0.0 | [0.0] |
|       Hemicellulose | 0.0 | [0.0] |
|   Sugar Alcohols | | |
|       Glycerol | 4.0 | [16.7] |
|       Erythritol | 0.2 | [0.8] |
|       Others | 2.4 | [10.0] |
| Protein | 4.0 | [16.7] |

For non-digestible saccharides not listed in Table 1, the calorie conversion factor is readily available from ingredient manufacturers. Alternatively, the factors may be determined from analysis and comparison of the composition and heats of combustion of dietary material with those of excreted material (see D.A.T. Southgate and J.V.G.A. Durnin, "Calorie conversion factors. An experimental reassessment of the factors used in the calculation of the energy value of human diets.", British Journal of Nutrition, 1970, 24, pp. 517-535).

**Free sugars**

As used herein, the term "free sugars" is defined as in "Diet, nutrition and the prevention of chronic diseases" - Report of a Joint WHO/FAO Expert Consultation, *WHO Technical Report Series* 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or milk.

**Complex saccharides**

As used herein, the term "complex saccharide" refers to oligosaccharides and polysaccharides with a degree of polymerisation (DP) of at least three.

**Carbohydrate molecular weight**

The average molecular weight for carbohydrate comprising a mixture of saccharides and/or sugar alcohols is defined by the number average molecular weight $<M>_n$ (Equation 2). Where $w_i$ is the mass of saccharide or sugar alcohol i, $M_i$ is the molar mass of saccharide or sugar alcohol i and $N_i$ is the number of moles of saccharide or sugar alcohol i of molar mass $M_i$.

$$< M >_n = \frac{\sum w_i}{\sum \left( {w_i}/{M_i} \right)} = \frac{\sum N_i M_i}{\sum N_i}$$

Glucose syrups (or "corn syrups" as they are sometimes called) are complex multi-component digestible saccharides derived from starch and the dextrose equivalent (DE) is a common industrial means of classification. Since they are complex mixtures their number average molecular weight $<M>_n$ can be calculated from Equation 3 (Journal of Food Engineering, 33 (1997) 221-226):

$$DE = \frac{18016}{<M>_n} \qquad\qquad (3)$$

**Overrun**

Overrun is defined by Equation 4:

$$\text{Overrun} = \frac{\text{volume of frozen aerated product} - \text{volume of premix at ambient temp}}{\text{volume of premix at ambient temp}} \times 100 \qquad (4)$$

It is measured at atmospheric pressure.

Brief Description of the Invention

In a first aspect, the present invention provides a frozen confection having a total energy content of from 150 to 350 kcal (628 to 1460 kJ) per 100 g of frozen confection; the frozen confection comprising fat and carbohydrate, the carbohydrate comprising free sugars, the fat comprising saturated fatty acids; and wherein:

- from 15 to 40% of the total energy content of the frozen confection is provided by the fat;
- less than 15% of the total energy content of the frozen confection is provided by the saturated fatty acids;
- from 55 to 75% of the total energy content of the frozen confection is provided by the carbohydrate; and
- less than 17% of the total energy content of the frozen confection is provided by the free sugars.

Such a frozen confection is found to be as palatable as a conventional ice confection while providing a healthy balance of fat, saturated fat, carbohydrate and free sugars. In order to maximise palatability it is preferred that the total energy content is at least 160 kcal (669 kJ) per 100 g, more preferably in the range 170 to 300 kcal (711 to 1260 kJ) per 100g.

In order to optimise the balance of dietary factors it is preferred that the energy contributions are within the following ranges:

- the free sugars contributing less than 15%, more preferably less than 10% of the total energy content of the frozen confection; and/or
- the fat contributing from 15 to 35% of the total energy content of the frozen confection; and/or
- the saturated fatty acids contributing less than 12%, more preferably less than 10% of the total energy content of the frozen confection.

In a particularly preferred embodiment, the frozen confection also comprises a balanced amount of protein. Preferably, the protein provides at least 10% of the total energy content of the frozen confection. Preferably also, no more than 15% of the total energy content of the frozen confection is provided by the protein.

In order for the fat to contribute to the stability and processability of the confections, it is preferred that the confection contains some saturated fat. In particular it is preferred that the saturated fatty acids contribute at least 5% of the total energy content of the frozen confection

Suitable fats for use in the present invention include animal fats (such as butterfat) and vegetable oils (such as coconut oil, palm oil, sunflower oil, safflower oil, rapeseed oil, and soya oil) and mixtures thereof.

In order to maximise the palatability and stability of the frozen confection it is preferred that the amount of fat is greater than 0.5% by weight of the frozen confection, more preferably greater than 3%. Preferably also, the amount of fat is less than 10% by weight of the frozen confection, more preferably less than 8%.

Suitable proteins for use in the present invention include animal proteins such as milk proteins, egg proteins and gelatin as well as vegetable proteins such as soya proteins. Particularly preferred are milk proteins owing to their superior flavour, heat stability and surface activity. Suitable sources of milk protein include milk, concentrated milk, milk powders, whey, whey powders and whey protein concentrates/isolates. In order to aid in emulsification and aeration during manufacture of the frozen confection it is preferable that the protein content is greater than 1% by weight of the frozen confection, more preferably greater than 2%. In order to allow for destabilisation of the fat during freezing of the frozen confection, however, it is also preferable that the protein content is less than 8%, more preferably less than 6% by weight of the frozen confection.

In order to provide the relatively high proportion of energy required from carbohydrate, it is preferable that the frozen confection contains at least 20% carbohydrate by weight of the frozen confection, more preferably at least 25%. To prevent the frozen confection from becoming overly sweet, and to avoid depression of the freezing point of the confection to such an extent as to prevent a desirable amount of ice to form in the confection, it is also preferred that the carbohydrate content is less than 50% by weight of the frozen confection, more preferably less than 45%.

The carbohydrate may suitably comprise any edible saccharide and/or sugar alcohol. In order to provide optimum palatability, however, and to avoid off-tastes and digestive problems associated with some sugar alcohols and non-digestible carbohydrates, it is preferable that the carbohydrate comprises mainly digestible saccharides. In particular it is preferred that the carbohydrate comprises digestible saccharides in an amount of at least 70% by weight of the carbohydrate, more preferably at least 90% and even more preferably at least 99%.

A preferred saccharide is lactose, especially when added as part of the milk solids. This is because lactose has a relatively low molecular weight and therefore provides excellent freezing point depression but is neither overly sweet nor counted among the unhealthy free sugars (when added as part of the milk solids). Thus it is preferable that lactose is present in an amount of at least 3% by weight of the frozen confection, preferably at least 4%. In order to avoid crystallisation of the lactose, however, it is also preferred that the lactose is present in an amount of less than 9%, preferably less than 8% by weight of the frozen confection.

In order to provide the confection with the customary sweetness that consumers enjoy, it is preferable to include some free sugars. Suitable amounts are from 1 to 8% by weight of the frozen confection, preferably from 2.5 to 5%. Suitable monosaccharides include glucose (dextrose), galactose and, especially fructose owing to its high relative sweetness. Suitable disaccharides include sucrose and maltose.

In order to compensate for the relatively low levels of free sugars employed, it is particularly preferred that the carbohydrate comprises complex saccharides in an amount of at least 10% by weight of the frozen confection, more preferably at least 15%. To avoid the confection becoming overly hard, however it is also preferable that the complex saccharide is used in an amount of less than 40% by weight of the frozen confection, preferably less than 30%.

The complex saccharide can cause the ice cream to become hard and unpalatable owing to its relatively high molecular weight. In particular it has been found preferable that the carbohydrate as a whole has a number average molecular weight of no more than 650 g mol$^{-1}$, more preferably no more than 600 g mol$^{-1}$ and most preferably no more than 575 g mol$^{-1}$. Surprisingly, however, it has been found that employing a carbohydrate with a number average molecular weight in the range 350 to 650 g mol$^{-1}$, and preferably in the range 400 to 575 g mol$^{-1}$, results in a product with acceptable palatability, particularly in respect of sweetness and firmness.

A convenient source of complex saccharide is glucose syrup as such syrups provide a single source of both free sugars and digestible complex saccharides. Glucose syrups having a DE in the range 20 to 40 DE are particularly preferred as they do not contribute excessively to the molecular weight of the carbohydrate whilst still providing adequate levels of sweetness and energy to the frozen confection. Especially preferred are glucose syrups having a DE in the range 22 to 34. Suitable amounts of glucose syrup solids range from 18 to 45% by weight of the frozen confection, preferably from 20 to 40%, more preferably from 22 to 35%. Most convenient are glucose syrups comprising free sugars in an amount of from 8 to 30% by dry weight of the glucose syrup, preferably from 10 to 25%.

If non-digestible saccharides are included in the frozen confection then the preferred non-digestible saccharides include oligofructose, inulin, polydextrose, resistant starch and mixtures thereof.

Polydextrose is a randomly bonded condensation polymer of D-glucose with some bound sorbitol and citric acid. The 1,6-glycosidic linkage predominates in the polymer. Polydextrose is resistant to digestion in the human small intestinal tract and has a metabolisable energy content (calorie conversion factor) of 1.0 kcal (4.2 kJ) $g^{-1}$. It is available from the Danisco company under the trade name Litesse™. Polydextrose has a relatively high molecular weight of around 2500.

Resistant starches are food starches or starch derivatives which are not digestible by the human body. There are four main groups of resistant starches: RS1, RS2, RS3 and RS4. RS1 is physically inaccessible starch, e.g. trapped in seeds. RS2 starch is granular starch. Examples include banana, high amylose starches. RS3 starch is a highly retrograded starch, e.g. extruded cereals. RS4 is chemically modified starch. Resistant starches have a metabolisable energy content (calorie conversion factor) of around 1.6 kcal (6.7 kJ) $g^{-1}$. Resistant starches are available commercially from National Starch under the trade names Novelose™ and Hi-maize™.

Oligofructose and inulin are both available from the ORAFTI company under the trade names Raftlilose™ and Raftiline™, respectively. Inulin and oligofructose are composed of linear chains of fructose units linked by β(2-1) bonds and often terminated by a glucose unit. Inulin contains chains with up to 60 fructose units. Oligofructose has between 2 and 7 fructose units. Oligofructose is obtained from inulin by partial enzymatic hydrolysis. Inulin has a metabolisable energy content (calorie conversion factor) of 1.2 kcal (5.0 kJ) $g^{-1}$, whilst oligfructose has a metabolisable energy content (calorie conversion factor) of 2 kcal (8.4 kJ) $g^{-1}$. Oligofructose is the most preferred source of non-digestible saccharide for use in the present invention owing to its low molecular weight and therefore high freezing point depression power.

The frozen compositions according to the present invention may also contain artificial sweeteners, such as aspartame, saccharin, acesulfame K, alitame, thaumatin, cyclamate, glycyrrhizin, stevioside, neohesperidine, sucralose, monellin and neotame. It has been found, however, that by keeping the energy content of the confection in the range specified above, it is possible to formulate palatable frozen confections according to he invention without introducing artificial sweeteners. Thus, in order to avoid off-tastes it is particularly preferred that the frozen confection is substantially free from artificial sweeteners. Preferably the frozen confection comprises artificial sweeteners in an amount such that they provide a sweetness equivalent to less than 0.5% sucrose, more preferably less than 0.01% sucrose.

Frozen confections according to the present invention preferably contain ice. Thus it is preferred that the frozen confections contain at least 40% water by weight of the frozen confection, preferably at least 50% and more preferably at least 55%.

According to a preferred embodiment of the invention, the frozen confection is aerated. The overrun may range from 50 to 150%, preferably 70 to 130%.

The frozen confections may also comprise a stabiliser. Suitable stabilisers include one or more of tara gum, guar gum, locust been gum, carrageenan, gelatin, alginate, carboxymethyl cellulose, xanthan and pectin.

The frozen confections provided by the present invention afford consumers the everyday enjoyment of a popular food without providing imbalance in their dietary intake. However, the frozen confections of this invention may also be used in a method of aiding adherence to a weight loss or weight control plan. The method comprises the step of administering to the individual a frozen confection according to the invention.

The frozen confections of this invention may also suitably provide a nutritionally neutral base for delivering nutritional actives. Thus in a preferred embodiment the frozen confection is fortified with one or more nutritional actives. The nutritional actives may be a mineral, a vitamin, a pro-biotic, a pre-biotic, an antioxidant, an essential oil, a plant sterol, an appetite suppressant, or a bioactive peptide.

A process for manufacturing a frozen confection, the process comprises the steps of:

(i) forming a premix comprising a plurality of ingredients, the ingredients including a glucose syrup having a dextrose equivalent in the range 20 to 40 DE, the glucose syrup comprising solids and the glucose syrup solids being present in an amount of from 18 to 45% by weight of the premix; and then
(ii) freezing the premix thereby to form the frozen confection.

Such a process allows for manufacturing frozen confections with balanced amounts of free sugars and complex saccharides with the minimum of carbohydrate ingredients. Thus it is preferable that the frozen confection manufactured by the process has from 55 to 75% of the total energy content of the frozen confection provided by carbohydrate; and less than 17% of the total energy content of the frozen confection provided by free sugars. More preferably the free sugars contribute less than 15%, most preferably less than 10% of the total energy content of the frozen confection. The process is thus also suitable for manufacturing the frozen confections according to the invention and as described hereinabove.

Preferably the glucose syrup has a DE in the range 22 to 34. Most preferred are glucose syrups comprising free sugars in an amount of from 8 to 30% by dry weight of the glucose syrup, preferably from 10 to 25%.

Preferably, also, the glucose syrup solids are present in an amount of from 20 to 40%, more preferably from 22 to 35%, by weight of the premix.

Detailed Description of the Invention

The invention will now be further described by reference to the following non-limiting example.

**Example**

This example demonstrates seven formulations and a process according to the invention.

*Materials*

The frozen confections were formulated using the following materials:

- Skimmed milk powder (SMP) was supplied by Meadow Foods (York, UK) and contained 50% (w/w) digestible saccharide (lactose), 35% (w/w) protein and 1% (w/w) milk fat with the remainder being ash and moisture.
- Sucrose was pure and crystalline and supplied by Tate and Lyle (London, UK).
- Emulsifier was Grinsted™ Mono-Di HP 60 supplied by Danisco (Babard, Denmark) and contained 98%(w/w) saturated fat.
- Locust Bean Gum (LBG) was Viscogum FA supplied by Degussa Texturant Systems (France) and had a moisture content of less than 10%.
- Palm oil was supplied by Cargill Brocklebank (Merseyside, UK) and had a saturated fatty acid content of 51%.
- Rapeseed oil was supplied by Cargill Brocklebank (Merseyside, UK) and had a saturated fatty acid content of 8%.
- Low DE glucose syrup was C*Dry™GL 01924, supplied by Cerestar (France) and had a DE of 28 and a moisture content of 4% (w/w). On a dry basis the glucose syrup solids consisted of 14% (w/w) free sugars (consisting of 3% dextrose and 11% maltose) and 86% (w/w) digestible complex saccharides (consisting of 16.5% maltotriose and 69.5% higher saccharides).
- High DE glucose syrup was C*Pur™ 01934, supplied by Cerestar (France) and had a DE of 38 and a moisture content of 3% (w/w). On a dry basis the glucose syrup solids consisted of 34% (w/w) free sugars (consisting of 1% dextrose and 33% maltose) and 66% (w/w) digestible complex saccharides (consisting of 23% maltotriose and 43% higher saccharides).

*Formulations*

The seven formulations along with their properties are given in Table 2.

TABLE 2

|  | Formulation | | | | | | |
|---|---|---|---|---|---|---|---|
|  | 1 | 2 | 3 | 4 | 5 | 6 | 7 |
| SMP (% w/w) | 14.60 | 14.90 | 8.10 | 11.60 | 8.10 | 12.20 | 15.90 |
| Palm Oil (% w/w) | 2.54 | 2.54 | 3.25 | 3.45 | 1.89 | 4.55 | 3.25 |
| Rapeseed Oil (% w/w) | 1.37 | 1.37 | 1.75 | 1.86 | 1.02 | 2.45 | 1.75 |
| Sucrose (% w/w) | --- | --- | --- | 0.70 | --- | 0.40 | 0.80 |
| Low DE Glucose Syrup (% w/w) | 26.50 | 26.80 | 32.10 | 27.30 | 24.10 | 39.20 | 23.40 |
| High DE Glucose Syrup (% w/w) | 1.10 | 1.40 | --- | --- | --- | --- | --- |
| Emulsifier (% w/w) | 0.29 | 0.29 | 0.29 | 0.29 | 0.29 | 0.29 | 0.29 |
| LBG (% w/w) | 0.20 | 0.20 | 0.20 | 0.20 | 0.20 | 0.20 | 0.20 |
| Vanilla Flavour (% w/w) | 0.01 | 0.01 | 0.01 | 0.01 | 0.01 | 0.01 | 0.01 |
| Water (% w/w) | 53.39 | 52.49 | 54.30 | 54.59 | 64.39 | 40.70 | 54.40 |
|  |  |  |  |  |  |  |  |

(continued)

| | Formulation | | | | | | |
|---|---|---|---|---|---|---|---|
| | **1** | **2** | **3** | **4** | **5** | **6** | **7** |
| E (kcal / 100 g) | 195 | 198 | 199 | 198 | 150 | 260 | 196 |
| E (kJ / 100 g) | 816 | 828 | 833 | 828 | 628 | 1090 | 820 |
| Energy from fat (% of E) | 20.0 | 19.7 | 24.3 | 25.9 | 19.7 | 25.6 | 25.0 |
| Energy from saturated fat (% of E) | 8.1 | 8.0 | 9.5 | 10.1 | 8.2 | 9.8 | 9.9 |
| Energy from carbohydrate (% of E) | 69.5 | 69.8 | 70.0 | 65.9 | 72.7 | 67.8 | 63.7 |
| Energy from free sugars (% of E) | 8.1 | 8.2 | 8.7 | 8.8 | 8.7 | 8.7 | 8.0 |
| Energy from protein (% of E) | 10.5 | 10.5 | 5.7 | 8.2 | 7.6 | 6.6 | 11.3 |
| | | | | | | | |
| Carbohydrate $<M>_n$ (g mol$^{-1}$) | 537 | 536 | 585 | 550 | 571 | 572 | 519 |

*Process*

All ingredients except from the palm oil, rapeseed oil and emulsifier are combined in an agitated heated mix tank. The palm oil and rapeseed oil are warmed to around 60°C and then the emulsifier added to the liquid fat prior to pouring into the mix tank. Once all of the ingredients are blended together, the mix is subjected to high shear mixing at a temperature of 65°C for 2 minutes.

The premix is then passed through a homogeniser at 150 bar and 70°C and subjected to pasteurisation at 83°C for 20 s before being rapidly cooled to 4°C by passing through a plate heat exchanger. The premix is then aged at 4°C for 5 hours in an agitated tank prior to freezing.

Each formulation is frozen using a typical ice cream freezer (scraped surface heat exchanger, SSHE) operating with an open dasher (series 80), a mix flow rate of 150 1 / hour, an extrusion temperature of around -7°C and an overrun (at atmospheric pressure) of 100%. Directly from the freezer, the ice cream is filled into 250 ml cartons. The cartons are then transferred to a -25°C store for hardening and storage.

The ice creams are stored at -25°C for 3 weeks and then tempered at -18°C for at least 24 hours before consumption.

**Claims**

1.   A frozen confection having a total energy content of from 150 to 350 kcal (628 to 1460 kJ) per 100 g of frozen confection; the frozen confection comprising fat and carbohydrate, the carbohydrate comprising free sugars, the fat comprising saturated fatty acids; and wherein:

   • from 15 to 40% of the total energy content of the frozen confection is provided by the fat;
   • less than 15% of the total energy content of the frozen confection is provided by the saturated fatty acids;
   • from 55 to 75% of the total energy content of the frozen confection is provided by the carbohydrate;

   **characterised in that** less than 17% of the total energy content of the frozen confection is provided by the free sugars.

2.   A frozen confection according to claim 1 wherein less than 15% of the total energy content of the frozen confection is provided by the free sugars, preferably less than 10%.

3.   A frozen confection according to claim 1 or claim 2 wherein less than 35% of the total energy content of the frozen confection is provided by the fat.

4.   A frozen confection according to any preceding claim wherein less than 12% of the total energy content of the frozen confection is provided by the saturated fatty acids, more preferably less than 10%.

5.   A frozen confection according to any preceding claim wherein the frozen confection comprises protein and at least 10% of the total energy content of the frozen confection is provided by the protein.

6. A frozen confection according to claim 5 wherein no more than 15% of the total energy content of the frozen confection is provided by the protein.

7. A frozen confection according to claim 5 or claim 6 wherein the protein content is from 1 to 8%, preferably 2 to 6% by weight of the frozen confection.

8. A frozen confection according to any preceding claim wherein the fat content is from 0.5 to 10%, preferably 1 to 8% by weight of the frozen confection.

9. A frozen confection according to any preceding claim wherein the carbohydrate content is from 20 to 50%, preferably 25 to 45% by weight of the frozen confection.

10. A frozen confection according to any preceding claim wherein the carbohydrate comprises lactose in an amount of from 3 to 9% by weight of the frozen confection.

11. A frozen confection according to any preceding claim wherein the carbohydrate comprises free sugars in an amount of from 1 to 8% by weight of the frozen confection.

12. A frozen confection according to any preceding claim wherein the carbohydrate comprises digestible saccharides in an amount of at least 70% by weight of the carbohydrate, preferably at least 90%.

13. A frozen confection according to any preceding claim wherein the carbohydrate has a number average molecular weight of less than 650 g mol$^{-1}$, preferably less than 600 g mol$^{-1}$.

14. A frozen confection according to any preceding claim wherein the frozen confection has an overrun of from 50 to 150%.

15. A frozen confection according to any preceding claim wherein the frozen confection is fortified with one or more nutritional actives.

16. A frozen confection according to claim 15 wherein the nutritional actives are a mineral, a vitamin, a pro-biotic, a pre-biotic, an antioxidant, an essential oil, a plant sterol, an appetite suppressant, or a bioactive peptide.

**Patentansprüche**

1. Eiskonfekt, das einen Gesamtenergiegehalt von 150 bis 350 kcal (628 bis 1460 kJ) pro 100 g Eiskonfekt hat, wobei das Eiskonfekt Fett und Kohlenhydrat umfasst, das Kohlenhydrat freie Zucker umfasst, das Fett gesättigte Fettsäuren umfasst und wobei

   • 15 bis 40 % des Gesamtenergiegehalts des Eiskonfekts durch das Fett bereitgestellt werden;
   • weniger als 15 % des Gesamtenergiegehalts des Eiskonfekts durch die gesättigten Fettsäuren bereitgestellt werden;
   • 55 bis 75 % des Gesamtenergiegehalts des Eiskonfekts durch das Kohlenhydrat bereitgestellt werden;

   **dadurch gekennzeichnet, dass** weniger als 17 % des Gesamtenergiegehalts des Eiskonfekts durch die freien Zucker bereitgestellt werden.

2. Eiskonfekt nach Anspruch 1, worin weniger als 15 % des Gesamtenergiegehalts des Eiskonfekts durch die freien Zucker bereitgestellt werden, vorzugsweise weniger als 10 %.

3. Eiskonfekt nach Anspruch 1 oder Anspruch 2, worin weniger als 35 % des Gesamtenergiegehalts des Eiskonfekts durch das Fett bereitgestellt werden.

4. Eiskonfekt nach einem vorangehenden Anspruch, worin weniger als 12 % des Gesamtenergiegehalts des Eiskonfekts durch die gesättigten Fettsäuren bereitgestellt werden, vorzugsweise weniger als 10 %.

**5.** Eiskonfekt nach einem vorangehenden Anspruch, worin das Eiskonfekt Protein umfasst und wenigstens 10 % des Gesamtenergiegehalts des Eiskonfekts durch das Protein bereitgestellt werden.

**6.** Eiskonfekt nach Anspruch 5, worin nicht mehr als 15 % des Gesamtenergiegehalts des Eiskonfekts durch das Protein bereitgestellt werden.

**7.** Eiskonfekt nach Anspruch 5 oder 6, worin der Proteingehalt 1 bis 8 Gew.-%, vorzugsweise 2 bis 6 Gew.-%, des Eiskonfekts ist.

**8.** Eiskonfekt nach einem vorangehenden Anspruch, worin der Fettgehalt 0,5 bis 10 Gew.-%, vorzugsweise 1 bis 8 Gew.-%, des Eiskonfekts ist.

**9.** Eiskonfekt nach einem vorangehenden Anspruch, worin der Kohlenhydratgehalt 20 bis 50 Gew.-%, vorzugsweise 25 bis 45 Gew.-%, des Eiskonfekts ist.

**10.** Eiskonfekt nach einem vorangehenden Anspruch, worin das Kohlenhydrat Lactose in einer Menge von 3 bis 9 Gew.-% des Eiskonfekts umfasst.

**11.** Eiskonfekt nach einem vorangehenden Anspruch, worin das Kohlenhydrat freie Zucker in einer Menge von 1 bis 8 Gew.- des Eiskonfekts umfasst.

**12.** Eiskonfekt nach einem vorangehenden Anspruch, worin das Kohlenhydrat verdauliche Saccharide in einer Menge von wenigstens 70 Gew.-% des Kohlenhydrats, vorzugsweise wenigstens 90 %, umfasst.

**13.** Eiskonfekt nach einem vorangehenden Anspruch, worin das Kohlenhydrat ein zahlenmittleres Molekulargewicht von weniger als 650 g Mol$^{-1}$, vorzugsweise weniger als 600 g Mol$^{-1}$, hat.

**14.** Eiskonfekt nach einem vorangehenden Anspruch, worin das Eiskonfekt einen Aufschlag von 50 bis 150 % hat.

**15.** Eiskonfekt nach einem vorangehenden Anspruch, wobei das Eiskonfekt mit einem nutritionalen Wirkstoff oder mehreren nutritionalen Wirkstoffen verstärkt ist.

**16.** Eiskonfekt nach Anspruch 15, wobei die nutritionalen Wirkstoffe ein Mineralstoff, ein Vitamin, ein Pro-Biotikum, ein Pre-Biobiotikum, ein Antioxidans, ein ätherisches Öl, ein Pflanzensterol, ein Appetitzügler oder ein bioaktives Peptid sind.

## Revendications

**1.** Confiserie surgelée ayant une valeur énergétique totale de 150 à 350 kcal (628 à 1 460 kJ) pour 100 g de confiserie surgelée ; la confiserie surgelée comprenant de la matière grasse et des glucides, les glucides comprenant des sucres libres, la matière grasse comprenant des acides gras saturés, et dans laquelle :

  - de 15 à 40 % de la valeur énergétique totale de la confiserie surgelée est fournie par la matière grasse ;
  - moins de 15 % de la valeur énergétique totale de la confiserie surgelée est fournie par les acides gras saturés ;
  - de 55 à 75 % de la valeur énergétique totale de la confiserie surgelée est fournie par les glucides ;

  **caractérisée en ce que** moins de 17 % de la valeur énergétique totale de la confiserie surgelée est fournie par les sucres libres.

**2.** Confiserie surgelée selon la revendication 1, dans laquelle moins de 15 % de la valeur énergétique totale de la confiserie surgelée est fournie par les sucres libres, de préférence moins de 10 %.

**3.** Confiserie surgelée selon la revendication 1 ou la revendication 2, dans laquelle moins de 35 % de la valeur énergétique totale de la confiserie surgelée est fournie par la matière grasse.

**4.** Confiserie surgelée selon l'une quelconque des revendications précédentes, dans laquelle moins de 12 % de la valeur énergétique totale de la confiserie surgelée est fournie par les acides gras saturés, de manière plus préférée moins de 10 %.

5. Confiserie surgelée selon l'une quelconque des revendications précédentes, la confiserie surgelée comprenant une protéine et au moins 10 % de la valeur énergétique totale de la confiserie surgelée est fournie par la protéine.

6. Confiserie surgelée selon la revendication 5, dans laquelle pas plus de 15 % de la valeur énergétique totale de la confiserie surgelée est fournie par la protéine.

7. Confiserie surgelée selon la revendication 5 ou la revendication 6, dans laquelle la teneur en protéine est de 1 à 8 %, de préférence de 2 à 6 % en poids de la confiserie surgelée.

8. Confiserie surgelée selon l'une quelconque des revendications précédentes, dans laquelle la teneur en matière grasse est de 0,5 à 10 %, de préférence de 1 à 8 % en poids de la confiserie surgelée.

9. Confiserie surgelée selon l'une quelconque des revendications précédentes, dans laquelle la teneur en glucides est de 20 à 50 %, de préférence de 25 à 45 % en poids de la confiserie surgelée.

10. Confiserie surgelée selon l'une quelconque des revendications précédentes, dans laquelle les glucides comprennent du lactose en une quantité allant de 3 à 9 % en poids de la confiserie surgelée.

11. Confiserie surgelée selon l'une quelconque des revendications précédentes, dans laquelle les glucides comprennent des sucres libres en une quantité allant de 1 à 8 % en poids de la confiserie surgelée.

12. Confiserie surgelée selon l'une quelconque des revendications précédentes, dans laquelle les glucides comprennent des saccharides digestibles en une quantité d'au moins 70 % en poids des glucides, de préférence au moins 90 %.

13. Confiserie surgelée selon l'une quelconque des revendications précédentes, dans laquelle les glucides ont un poids moléculaire moyen en nombre inférieur à 650 g mol$^{-1}$, de préférence inférieur à 600 g mol$^{-1}$.

14. Confiserie surgelée selon l'une quelconque des revendications précédentes, dans laquelle la confiserie surgelée a un foisonnement allant de 50 à 150 %.

15. Confiserie surgelée selon l'une quelconque des revendications précédentes, dans laquelle la confiserie surgelée est fortifiée à l'aide d'un ou plusieurs actifs nutritionnels.

16. Confiserie surgelée selon la revendication 15, dans laquelle les actifs nutritionnels sont un minéral, une vitamine, un probiotique, un prébiotique, un antioxydant, une huile essentielle, un stérol végétal, un coupe-faim ou un peptide bioactif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57036944 A

**Non-patent literature cited in the description**

- **D.A.T. SOUTHGATE ; J.V.G.A. DURNIN.** Calorie conversion factors. An experimental reassessment of the factors used in the calculation of the energy value of human diets. *British Journal of Nutrition,* 1970, vol. 24, 517-535

- *Journal of Food Engineering,* 1997, vol. 33, 221-226